# FASCICULE DE BREVET EUROPEEN

(11) **EP 4 158 260 B1**
(45) Date de publication et mention de la délivrance du brevet: **16.04.2025**
(21) Numéro de dépôt: 21729539.3
(22) Date de dépôt: 31.05.2021
(51) Int. Cl.: F25B 49/02, F25B 43/00, F25B 41/31, B60H 1/00, F25B 7/00, F25B 41/42, F25B 41/20, F25B 41/24

(54) **PROCÉDÉ DE CONTRÔLE D'UN CIRCUIT DE REGULATION THERMIQUE, NOTAMMENT POUR UN VÉHICULE AUTOMOBILE**
VERFAHREN ZUR STEUERUNG EINES THERMISCHEN REGELKREISES, INSBESONDERE FÜR EIN KRAFTFAHRZEUG
METHOD FOR CONTROLLING A THERMAL REGULATION CIRCUIT, IN PARTICULAR FOR A MOTOR VEHICLE

(30) Priorité: 01.06.2020 FR 2005754
(43) Date de publication de la demande: 05.04.2023
(73) Titulaire: VALEO SYSTEMES THERMIQUES, 78320 Le Mesnil Saint-Denis (FR)
(72) Inventeur: PORTO, Muriel, 78322 Le Mesnil-Saint-Denis Cedex (FR); BEAUVIS, Régis, 78322 Le Mesnil-Saint-Denis Cedex (FR); NOUAINIA, Wissem, 78322 Le Mesnil-Saint-Denis Cedex (FR); EL CHAMMAS, Rody, 78322 Le Mesnil-Saint-Denis Cedex (FR); LIU, Jinming, 78322 Le Mesnil-Saint-Denis Cedex (FR)
(74) Mandataire: Valeo Systèmes Thermiques
(86) Numéro de dépôt international: PCT/EP2021/064506
(87) Numéro de publication internationale: WO 2021/245013

(56) Documents cités:
- EP-A1- 3 012 556
- CN-A- 105 698 451
- JP-A- 2001 311 565

## Description

L'invention concerne un procédé de contrôle d'un circuit de régulation thermique, notamment pour un véhicule automobile. Il pourra en particulier s'agir d'un circuit d'un système de chauffage, ventilation et/ou de conditionnement (CVC) d'air dudit véhicule.

Un tel circuit comprend notamment une boucle de circulation d'un fluide réfrigérant, ainsi qu'un détendeur régulant un flux dudit fluide dans ladite boucle. Lors de la première mise en service du véhicule et tout au long de sa durée de vie, le fluide réfrigérant du circuit de régulation thermique est chargé de résidus, d'origines diverses, qui risquent de s'accumuler en entrée du détendeur. Il s'agit, par exemple, de particules et/ou éléments visqueux qui peuvent aller jusqu'à former une boue. Cela a pour conséquence une réduction du débit du fluide réfrigérant à travers ledit détendeur, voire une défaillance dudit circuit.

Ceci est particulièrement le cas avec les détendeurs contrôlables électroniquement. En effet, lors de leur fonctionnement nominal, l'ouverture offerte par ceux-ci pour le passage du fluide réfrigérant présente des dimensions variant de quelques micromètres, en configuration de passage du fluide avec détente, à quelques dizaines de micromètres, en configuration de passage du fluide sans détente. Ainsi, même dans cette dernière configuration, les résidus présents dans le circuit, surtout au moment de la première mise en route, risque d'être piégés par le détendeur. Pourtant de tels détendeurs peuvent présenter une ouverture supérieure à celles évoquées plus haut.

Afin de prévenir une telle accumulation de résidus en entrée du détendeur, une solution consiste à disposer un filtre spécifique en amont ou en entrée dudit détendeur. Toutefois, cette solution présente plusieurs limites ou inconvénients dont certains sont listés ci-après.

Tout d'abord, la mise en œuvre d'un filtre dans le circuit de régulation thermique requiert un espace suffisant dans celui-ci. Une condition difficile à satisfaire dans un contexte de réduction d'encombrement des équipements automobiles. Ensuite, lorsque cette mise en œuvre est rendue techniquement possible, elle présente un coût relativement élevé pour une efficacité limitée. En effet, le filtre peut également être le siège d'une accumulation de résidus et sa présence dans le circuit de régulation thermique peut réduire la pression d'écoulement du fluide réfrigérant. EP 3 012 556 A1 divulgue un procédé de contrôle d'un circuit selon le préambule de la revendication 1.

La présente invention a pour but de pallier au moins en partie les limites et inconvénients précédents.

A cet effet, l'invention a pour objet un procédé de contrôle d'un circuit de régulation thermique tel que défini dans la revendication 1. En particulier, ledit circuit comprend une première boucle de circulation d'un fluide réfrigérant à travers un premier détendeur à ouverture réglable, ledit procédé comprenant une étape d'ouverture dudit premier détendeur au-delà d'une plage d'ouverture en fonctionnement nominal dudit circuit de sorte à permettre une évacuation de résidus à travers ledit premier détendeur.

Ainsi, un tel procédé permet d'évacuer les résidus risquant d'être accumulés en entrée du détendeur en exploitant les caractéristiques intrinsèques de ce dernier, à savoir sa capacité d'ouverture au-delà de la plage d'ouverture utilisé en fonctionnement nominal du circuit. Il n'est donc pas nécessaire de disposer d'équipements supplémentaires dans la boucle de circulation du fluide réfrigérant pour éviter le risque de blocage des résidus au niveau de détendeur.

Par « plage d'ouverture en fonctionnement nominal du circuit », on entend la plage d'ouverture dans laquelle le détendeur fonctionne lorsque le circuit est utilisé pour sa fonction de régulation thermique, en particulier lorsque les occupants du véhicule souhaitent refroidir ou réchauffer l'habitacle du véhicule et/ou en cas de besoin de refroidissement et/ou de chauffage de composants du véhicule, tels que la batterie. Il s'agit, par exemple, d'une plage allant d'une ouverture nulle du détendeur à une ouverture partielle la plus faible possible permettant d'obtenir un niveau de détente permettant de réguler l'échange de chaleur à un niveau souhaité.

A titre d'exemple, le détendeur présente une plage d'ouverture en fonctionnement nominal du circuit allant de 0 à au plus 50% de son ouverture maximum, plus spécifiquement de 0 à au plus 20% de son ouverture maximum, encore plus spécifiquement de 0 à au plus 10% de son ouverture maximum. Ledit degré d'ouverture est évalué, notamment, par un pas de commande, allant de 0 pour la position fermée à 5000 pour la position pleinement ouverte. Les plages évoquées plus haut correspondent alors respectivement à des plages de pas allant de 0 à au plus 2500 pas, 0 à au plus 1000 pas, 0 à au plus 500 pas.

Toujours à titre d'exemple, l'ouverture du détendeur pour la première étape selon l'invention est, par exemple, supérieure à 80% de l'ouverture maximum dudit détendeur, voire égale à l'ouverture maximum dudit détendeur alors que la limite supérieure de la plage d'ouverture en fonctionnement nominal du circuit est inférieure à 50%, voire 20%, voire 10% de l'ouverture maximum dudit détendeur.

Autrement dit et selon l'exemple plus haut, l'ouverture choisie pour la première étape selon l'invention, est supérieure à 4000 pas voire égale à 5000 pas. On est ainsi dans tous les cas très au-dessus de la limite supérieure de la plage d'ouverture en fonctionnement nominal du circuit, qu'elle soit fixée à 500 pas, 1000 pas ou même 2500 pas. L'ouverture du détendeur pendant cette première étape permet de la sorte aux résidus présents dans le circuit de passer à travers le détendeur sans rester coincés dans celui-ci.

L'invention peut également comprendre l'une quelconque des caractéristiques suivantes, prises individuellement ou selon toutes combinaisons techniquement possibles qui forment autant de modes de réalisation de l'invention :
- lors de ladite première étape, on filtre lesdits résidus à l'aide d'un filtre situé sur ladite première boucle en aval dudit premier détendeur selon un sens de circulation dudit fluide réfrigérant ; les résidus ayant traversé le dispositif de détente traversant le compresseur avant d'être stoppés par le filtre,
- ledit filtre est logé dans une bouteille de stockage dudit fluide réfrigérant ;
- ladite première étape dure de 30 secondes à deux minutes, notamment environ 1 minute ;
- ladite première boucle échange des calories avec un flux d'air, notamment lors de la première et/ou de la deuxième étape
- un groupe moto ventilateur est actionné pour accélérer ledit flux d'air notamment en face avant et/ou dans un boîtier de climatisation du véhicule ;
- ladite deuxième étape dure de 15 secondes à 1 minute, notamment environ 30 secondes ;
- ledit procédé comprend une troisième étape, postérieure à ladite deuxième étape, troisième étape dans laquelle ledit fluide ne circule plus,
- lors de la troisième étape, ledit premier détendeur est ramené dans une position située dans la plage d'ouverture en fonctionnement nominal du circuit ;
- lors de la première étape, voire lors de la deuxième étape, ledit fluide suit un parcours de ladite première boucle également suivi par ledit fluide réfrigérant lors d'une mode de fonctionnement nominal dudit circuit ;
- ladite première boucle comprend un compresseur
- ladite première boucle comprend en outre un premier échangeur, un deuxième échangeur ainsi qu'un troisième échangeur ;
- ledit premier détendeur est disposé en entrée dudit deuxième échangeur ;
- ledit troisième échangeur est équipé en entrée d'un deuxième détendeur ;
- ledit circuit comprend une deuxième boucle de circulation d'un fluide caloporteur ;
- ladite deuxième boucle est configurée pour échanger des calories avec ladite première boucle à travers ledit premier échangeur ;
- chacune desdites boucles est en outre configurée pour échanger des calories avec un flux d'air extérieur et/ou un flux d'air intérieur ;
- ledit circuit est configuré pour fonctionner en un mode de pompe à chaleur dans lequel le flux d'air intérieur est réchauffé au moyen d'une chaleur récupérée du flux d'air extérieur par l'intermédiaire de ladite première boucle et de ladite deuxième boucle ;
- ledit circuit est configuré pour fonctionner en un mode de déshumidification totale dans lequel le flux d'air intérieur est refroidi puis réchauffé au moyen d'un échange de chaleur avec le flux d'air extérieur par l'intermédiaire de ladite première boucle et de ladite deuxième boucle ;
- ledit fluide réfrigérant emprunte un parcours principal fermé passant dans l'ordre par ledit compresseur, ledit premier échangeur, ledit filtre, ledit premier détendeur, ledit deuxième échangeur, ledit deuxième détendeur et ledit troisième échangeur pour revenir audit compresseur ;
- ledit circuit est configuré pour fonctionner en un mode de climatisation dans lequel le flux d'air intérieur est refroidi en relâchant de la chaleur dans le flux d'air extérieur par l'intermédiaire de ladite première boucle et ladite deuxième boucle ;
- ledit circuit est configuré pour fonctionner en un mode de déshumidification simple dans lequel ledit flux d'air intérieur est refroidi puis réchauffé au moyen d'un échange de chaleur avec le flux d'air extérieur par l'intermédiaire de ladite première boucle et ladite deuxième boucle ;
- ledit fluide réfrigérant emprunte un parcours secondaire fermé passant dans l'ordre par ledit compresseur, ledit premier échangeur, ledit filtre, ledit premier détendeur et ledit deuxième échangeur pour revenir audit compresseur sans passer ni par le second détendeur ni par le troisième échangeur ;
- ledit fluide réfrigérant et/ou lesdits résidus s'écoulent, lors de ladite première étape, voire selon ladite seconde étape, suivant ledit parcours secondaire fermé,
- ledit fluide réfrigérant et/ou lesdits résidus s'écoulent, lors de ladite première étape, voire selon ladite seconde étape, selon ledit parcours principal fermé, ou selon un parcours tertiaire passant dans l'ordre par ledit compresseur, ledit premier échangeur, ledit filtre, ledit premier détendeur, ledit deuxième échangeur et ledit troisième échangeur en contournant ledit deuxième détendeur pour revenir audit compresseur ;
- l'un au moins entre ledit premier détendeur et ledit deuxième détendeur, en particulier ledit premier détendeur, est de type électronique ;
- l'un au moins entre ledit premier détendeur et ledit deuxième détendeur, en particulier ledit premier détendeur, est pilotable au moyen d'une unité de commande intégrée au véhicule;
- l'un au moins entre ledit premier détendeur et ledit deuxième détendeur, en particulier ledit premier détendeur, comprend une soupape présentant une paroi latérale conique ainsi qu'un siège de soupape formant un passage en entonnoir;
- ladite soupape est mobile par rapport audit siège, entre une position basse de fermeture dudit passage, une plage de positions intermédiaires d'ouverture dudit passage pour un écoulement dudit fluide réfrigérant avec détente, et une position haute d'ouverture maximale dudit passage pour une évacuation desdits résidus à travers ledit passage.

L'invention sera mieux comprise et d'autres détails, caractéristiques et avantages de l'invention apparaîtront à la lecture de la description suivante, faite à titre d'exemple non limitatif et en référence aux dessins annexés, dans lesquels :
- La figure 1 montre une représentation schématique d'un circuit de régulation thermique auquel le procédé conforme à l'invention s'applique;
- La figure 2 montre une représentation schématique en vue de coupe diamétrale d'un détendeur équipant le circuit de régulation de la figure 1;
- La figure 3 montre une représentation schématique du circuit de régulation thermique de la figure 1 selon un mode de fonctionnement de pompe à chaleur ;
- La figure 4 montre une représentation schématique du circuit de régulation thermique de la figure 1 selon un mode de fonctionnement de climatisation ;
- La figure 5 montre une représentation schématique du circuit de régulation thermique de la figure 1 selon un mode de fonctionnement de déshumidification totale ;
- La figure 6 montre une représentation schématique du circuit de régulation thermique de la figure 1 selon un mode de fonctionnement de déshumidification simple ;
- La figure 7 montre une représentation schématique d'un parcours de circulation d'un fluide réfrigérant du circuit de la figure 1 selon un mode de réalisation du procédé conforme à l'invention.

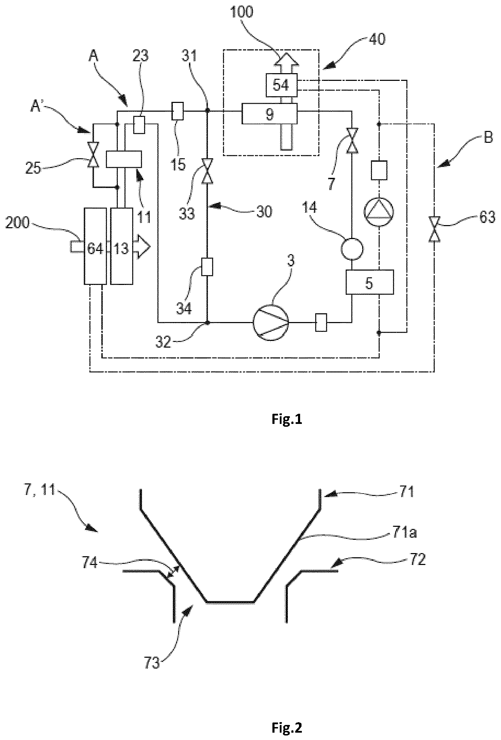

Comme illustré à la figure 1, l'invention s'applique à un circuit 1 de régulation thermique, notamment pour un véhicule automobile, et concerne un procédé de contrôle dudit circuit. Ledit circuit comprend une première boucle A de circulation d'un fluide réfrigérant ainsi que, préférentiellement, une deuxième boucle B de circulation d'un fluide caloporteur. La première boucle A et la deuxième boucle B sont configurées pour échanger des calories.

Les termes amont et aval employés dans la description qui suit se réfèrent au sens de circulation du fluide réfrigérant, du fluide caloporteur, d'un flux d'air extérieur à un habitacle de véhicule et/ou d'un flux d'air intérieur envoyé vers ledit habitacle. Sur les figures 1 et 3 à 6, les portions de la première boucle de circulation sont en traits pleins et les portions de la deuxième boucle de circulation sont en traits mixtes.

Sauf mention contraire, les dénominations « premier/ère », « deuxième », etc...utilisées dans la suite n'ont pas vocation à indiquer un niveau de hiérarchisation ou ordonnancer les termes qu'elles accompagnent. Ces dénominations permettent juste de distinguer les termes qu'elles accompagnent et peuvent être interverties sans que soit réduite la portée de l'invention.

Le fluide réfrigérant est par exemple un fluide susceptible de passer de phase liquide à gazeuse et réciproquement dans les conditions de température et de pression de la boucle de circulation du fluide réfrigérant. Il peut s'agir d'un fluide connu sous le nom de R134a ou d'un fluide connu sous le nom de R1234yf. Il pourra encore s'agir d'un fluide restant essentiellement à l'état gazeux comme le R744.

En mode de fonctionnement nominal du circuit, le circuit est utilisé pour sa fonction de régulation thermique, en particulier lorsque les occupants du véhicule souhaite refroidir ou réchauffer l'habitacle du véhicule et/ou en cas de besoin de refroidissement et/ou de chauffage de composants du véhicule, tels qu'une batterie. Cependant, dans le cadre de l'invention, le circuit fonctionnera également de façon non-nominale de façon à traiter un risque de défaillance, comme cela sera développé plus loin.

La première boucle A de circulation du fluide réfrigérant comprend, par exemple, un compresseur 3, un premier échangeur 5, une bouteille de stockage 14, un premier détendeur 7, un deuxième échangeur 9, un deuxième détendeur 11, ainsi qu'un troisième échangeur 13 qui, disposés en série dans cet ordre selon le sens de circulation du fluide réfrigérant, forment un parcours principal dudit fluide réfrigérant.

En particulier, le premier échangeur 5 est positionné conjointement sur la première boucle A de circulation du fluide réfrigérant et la deuxième boucle B de circulation du fluide caloporteur. Ledit échangeur 5 permet des échanges de calories entre ladite première boucle A et ladite deuxième boucle B. Il s'agit, par exemple, d'un échangeur bi-fluide.

Le deuxième échangeur 9 est configuré pour être traversé par un flux d'air intérieur 100 destiné à un habitacle du véhicule. Ledit deuxième échangeur 9 forme avec un radiateur interne 54 de la deuxième boucle B. Le deuxième échangeur 9 et le radiateur interne 54 sont disposés dans une unité 40 de chauffage, ventilation et climatisation (CVC) du circuit de régulation thermique 1. Une telle unité 40 est disposée, notamment, sous une planche de bord du véhicule.

Le troisième échangeur 13 est destiné à être traversé par un flux d'air extérieur 200 au véhicule automobile, et se présente sous la forme d'un évaporateur et/ou condenseur configuré pour être positionné en face avant du véhicule. Le flux d'air extérieur 200 traversant ledit troisième échangeur 13 passe préalablement à travers une calandre du véhicule.

Le premier échangeur 5, le deuxième échangeur 9 et le troisième échangeur 13 comprennent chacun une ou plusieurs passes de circulation du fluide réfrigérant. En particulier, le premier échangeur 5 comprend en outre ici une ou plusieurs passes de circulation du fluide caloporteur.

Le premier détendeur 7 et le deuxième détendeur 11 sont configurés pour sélectivement ouvrir totalement, fermer totalement ou opérer une détente, selon un débit donné, du fluide réfrigérant. En particulier, en position ouverte, lesdits détendeurs 7, 11 sont aptes à laisser passer le fluide réfrigérant sans perte de pression. En outre, lesdits détendeurs 7, 11 peuvent être de type thermostatique et comporter une fonction d'arrêt ; et/ou de type électronique, auquel cas ils sont pilotables au moyen d'une unité de contrôle intégrée au véhicule.

Selon l'invention, ledit circuit comprend un détendeur à ouverture réglable. Il s'agit ici du détendeur 7. Ce dernier est avantageusement du type électronique selon les indications données plus haut. L'autre détendeur 11 est préférentiellement du type thermostatique.

Comme illustré à la figure 2, le détendeur 7 à ouverture réglable comprend, par exemple, une soupape 71 présentant une paroi latérale tronconique 71a ainsi qu'un siège de soupape 72 formant un passage 73 en entonnoir. La soupape 71 est configurée pour être mobile par rapport au siège de soupape 72, entre une position basse de fermeture du passage 73 et une position haute d'ouverture maximum. Il est ici illustré une position intermédiaire d'ouverture dudit passage permettant un flux du fluide réfrigérant à travers ledit passage.

Un tel détendeur 7 présente une plage d'ouverture en fonctionnement nominal du circuit, inférieure à sa plage totale de fonctionnement. Il s'agit, par exemple, d'une plage allant d'une ouverture nulle du détendeur à une ouverture partielle correspondant à l'ouverture la plus faible possible permettant d'obtenir un niveau de détente permettant de réguler l'échange de chaleur à un niveau souhaité.

A titre d'exemple, le détendeur présente une plage d'ouverture en fonctionnement nominal du circuit allant de 0 à au plus 50% de son ouverture maximum, plus spécifiquement de 0 à au plus 20% de son ouverture maximum, encore plus spécifiquement de 0 à au plus 10% de son ouverture maximum. Ledit degré d'ouverture est évalué, notamment, par un pas de commande, allant de 0 pour la position fermée à 5000 pour la position pleinement ouverte. Les plages évoquées plus haut correspondent alors respectivement à des plages de pas allant de 0 à au plus 2500 pas, 0 à au plus 1000 pas, 0 à au plus 500 pas.

La bouteille de stockage 14 comprend avantageusement un filtre. Ladite bouteille 14 est disposée à distance dudit premier détendeur 7. Elle est éventuellement intégrée au premier échangeur 5. En variante, en combinaison ou en lieu et place de la bouteille 14, le circuit comprend un accumulateur disposé en aval du troisième échangeur 13 et en amont dudit compresseur 3.

En se reportant de nouveau à la figure 1, la première boucle A du circuit de régulation thermique 1 comprend en outre une branche de contournement 30 située entre un premier point de contournement 31 et un deuxième point de contournement 32. Le premier point de contournement 31 est positionné de préférence entre le deuxième échangeur 9 et le troisième échangeur 13 selon le parcours principal du fluide réfrigérant, et plus spécifiquement entre le deuxième échangeur 9 et le deuxième détendeur 11. Le deuxième point de contournement 32 est de préférence positionné entre le troisième échangeur 13 et le compresseur 3 selon le parcours principal du fluide réfrigérant.

La branche de contournement 30 permet de définir un parcours secondaire fermé de circulation du fluide réfrigérant comprenant dans l'ordre le compresseur 3, le premier échangeur 5, la bouteille de stockage 14, le premier détendeur 7 ainsi que le deuxième échangeur 9.

Préférentiellement, le circuit de régulation thermique 1 est configuré pour fonctionner selon différents modes en fonctionnement nominal du circuit, notamment un mode de mode pompe à chaleur et/ou un mode de climatisation.

Pour assurer ces modes de circulation désirés, la première boucle A de circulation du fluide réfrigérant comprend en outre des éléments mécaniques ou électromécaniques d'arrêt 15, 23, 33, positionnés à différents endroits de ladite première boucle, et qui sont activés/désactivés sélectivement afin de permettre le flux du fluide réfrigérant selon le parcours principal, le parcours secondaire ou d'autres parcours. Il s'agit, par exemple, de vannes.

Ainsi, à titre d'exemples non limitatifs, une première vanne d'arrêt 33 est configurée pour contrôler un flux du fluide réfrigérant à travers la branche de contournement 30. De même, un clapet antiretour 23 disposé en aval du troisième échangeur 13, entre ledit troisième échangeur et le deuxième point de contournement 32, permet de prévenir le reflux du fluide réfrigérant depuis la branche de contournement 30 vers le troisième échangeur 13. Enfin, une vanne d'arrêt 15 disposée entre le premier point de contournement 31 et le troisième échangeur 13 prévient un passage du fluide réfrigérant vers ledit troisième échangeur lorsque ledit fluide réfrigérant emprunte le parcours secondaire.

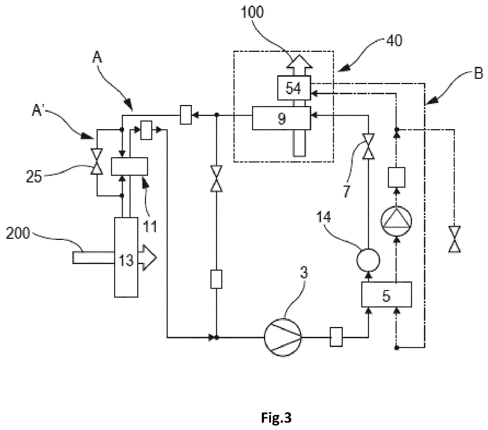

La figure 3 montre un circuit 1 de régulation thermique fonctionnant en mode pompe à chaleur. Dans ce mode de fonctionnement, le flux d'air intérieur 100 est réchauffé au moyen du liquide caloporteur par l'intermédiaire d'une chaleur récupérée du flux d'air extérieur 200 par le fluide réfrigérant.

Au niveau de la première boucle A, le fluide réfrigérant emprunte le parcours principal en passant successivement dans :
- le compresseur 3 où il est mis à haute pression,
- le premier échangeur 5 où il transmet de la chaleur au fluide caloporteur circulant dans la deuxième boucle B,
- le premier détendeur 7 où il subit éventuellement une perte de pression et passe à une pression intermédiaire,
- le deuxième échangeur 9,
- le deuxième détendeur 11 où il subit une perte de pression et passe à basse pression, et ;
- le troisième échangeur 13 où il récupère de la chaleur en refroidissant le flux d'air externe 200, avant de retourner au compresseur 3.

Au niveau de la deuxième boucle B, le fluide caloporteur relâche l'énergie calorifique obtenue du premier échangeur 5 dans le flux d'air intérieur 100, et ce par le biais du radiateur interne 54 de l'unité CVC 40.

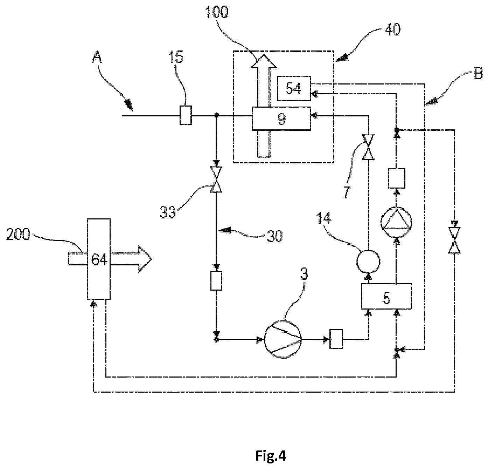

La figure 4 montre un circuit de régulation thermique 1 fonctionnant en mode de climatisation. Dans ce mode de fonctionnement, le flux d'air intérieur 100 est refroidi par le fluide réfrigérant et la chaleur récupérée lors de ce refroidissement est relâchée dans le flux d'air externe 200 par le fluide caloporteur.

Au niveau de la première boucle A, le fluide réfrigérant emprunte le parcours secondaire, en passant successivement dans :
- le compresseur 3 où il est mis sous haute pression,
- le premier échangeur 5 où il transmet de la chaleur au fluide caloporteur circulant dans la deuxième boucle B,
- le premier détendeur 7 où il subit une perte de pression et passe à basse pression,
- le deuxième échangeur 9 où il récupère de la chaleur en refroidissant le flux d'air interne 100, avant de retourner au compresseur 3.

Au niveau de la deuxième boucle B, le fluide caloporteur relâche la chaleur obtenue du flux d'air intérieur 100 au niveau du premier échangeur 5 dans le flux d'air extérieur 200, et ce par le biais d'un quatrième échangeur de chaleur 64 de ladite deuxième boucle B, par exemple situé en face avant du véhicule.

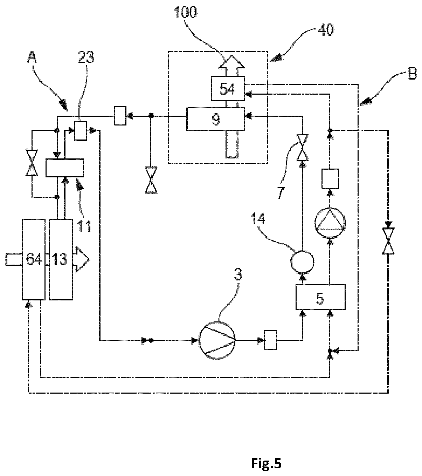

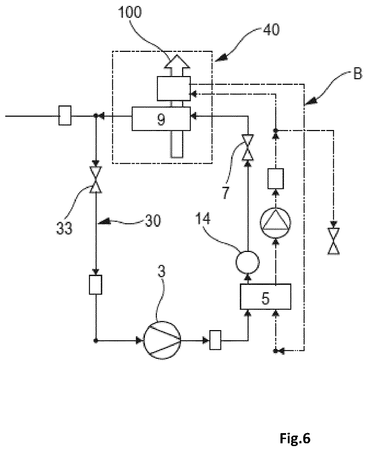

Le circuit de régulation thermique 1 peut également fonctionner selon un mode dit de déshumidification totale (figure 5), et/ou un mode dit de déshumidification simple ou partielle (figure 6), dans lesquels le flux d'air intérieur 100 est refroidi puis éventuellement réchauffé avant d'arriver dans l'habitacle.

Le mode de déshumidification totale dérive du mode de pompe à chaleur dont il reprend le parcours principal fermé du fluide réfrigérant dans la première boucle A. Le mode de déshumidification totale se distingue du mode de pompe en chaleur en ce qu'il prévoit que :
- le fluide réfrigérant passe à travers le deuxième détendeur 11 sans perte de pression ; et
- le fluide caloporteur de la deuxième boucle B évacue de la chaleur également dans le flux d'air extérieur 200, et ce à travers le quatrième échangeur de chaleur 64.

Dans ce mode, le flux d'air intérieur 100 est asséché en traversant le deuxième échangeur 9 sans être nécessairement réchauffé au niveau du radiateur interne 54.

Le mode de déshumidification simple dérive du mode de refroidissement dont il reprend le parcours secondaire fermé du fluide réfrigérant dans la première boucle. Le mode de déshumidification simple se distingue du mode de déshumidification totale en ce que le fluide caloporteur évacue de la chaleur dans le flux d'air intérieur 100 et non dans le flux d'air extérieur 200. L'évacuation de la chaleur dans le flux d'air intérieur 100 se fait à travers le premier échangeur 5 et le radiateur interne 54.

Dans ce mode, le flux d'air intérieur 100 est asséché en traversant le deuxième échangeur 9 et réchauffé au niveau du radiateur interne 54, sans que cela soit nécessairement ressenti comme un chauffage de l'habitacle.

Cela étant, des résidus provenant de la fabrication et/ou du montage du circuit ou de son usure circulent dans la boucle de fluide réfrigérant en étant entrainé par ce dernier. Ces résidus peuvent être retenus par le filtre de la bouteille 14. Toutefois, au moins lors de la première mise en service, les résidus se trouvant en aval de ladite bouteille 14 et en amont du premier détendeur 7 sont nécessairement entrainés jusqu'audit premier détendeur 7. Ils peuvent alors l'obstruer. En effet, sur sa plage d'ouverture en fonctionnement nominal du circuit, le passage à travers ledit premier détendeur 7 est étroit. Ceci est particulièrement illustré à la figure 2 où ce passage, fonction de la levée de la soupape 71, est illustré 74. La dimension de ce passage varie de quelques micromètres, en configuration de passage du fluide avec détente, à quelques dizaines de micromètres, en configuration de passage du fluide sans détente. Des résidus de taille supérieure au passage peuvent donc s'accumuler à cet endroit et boucher le circuit.

Le procédé conforme à l'invention a pour objectif d'évacuer les résidus accumulés en entrée du détendeur 7. Pour décrire le procédé, on considérera par la suite uniquement les résidus accumulés au niveau du premier détendeur 7 de l'exemple de circuit illustré. En outre, on considérera que ledit premier détendeur 7 est de type électronique, c'est-à-dire pilotable au moyen d'une unité de commande intégrée. Toutefois, le procédé reste applicable pour les résidus accumulés au niveau de tout autre détendeur à ouverture réglable prévu dans une boucle de circulation du fluide réfrigérant.

Le procédé conforme à l'invention comporte une première étape d'ouverture du détendeur 7 au-delà d'une plage d'ouverture en fonctionnement nominal du circuit. Le passage des résidus est de la sorte libéré et ils sont avantageusement piégés, en aval, au niveau du filtre de la bouteille 14.

A titre d'exemple, l'ouverture pour la première étape selon l'invention est supérieure à 80% de l'ouverture maximum dudit détendeur, voire égale à l'ouverture maximum dudit détendeur alors que la limite supérieure de la plage d'ouverture en fonctionnement nominal du circuit est inférieure à 50%, voire 20%, voire 10% de l'ouverture maximum dudit détendeur.

Autrement dit et selon l'exemple plus haut, l'ouverture choisie pour la première étape selon l'invention, est supérieure à 4000 pas voire égale à 5000 pas. On est ainsi dans tous les cas très au-dessus de la limite supérieure de la plage d'ouverture en fonctionnement nominal du circuit, qu'elle soit fixée à 500 pas, 1000 pas ou même 2500 pas. L'ouverture du détendeur pendant cette première étape permet de la sorte aux résidus présents dans le circuit de passer à travers le détendeur sans rester coincés dans celui-ci.

Pour ce faire l'unité de commande dudit détendeur 7 entraine ici une translation de la soupape 71 par rapport au siège de soupape 72. Lors de cette translation, la paroi latérale 71a de la soupape 71 s'écarte du siège de soupape 72 jusqu'à une position d'ouverture dans laquelle ladite paroi latérale 71a de la soupape 71 et ledit siège forment un passage 74 de taille supérieure à une taille maximale des résidus.

De façon avantageuse, la soupape 71 est mue par rapport au siège de soupape 73 jusqu'à atteindre une position représentant 80% de son ouverture maximale voire 100% de son ouverture maximale.

Lors de ladite première étape, on entraine ledit fluide réfrigérant selon un débit dit augmenté, supérieure à un débit en fonctionnement nominal dudit circuit. Pour cela, par exemple, le compresseur 3 est lancé à une vitesse dite accélérée, de l'ordre de 6000 tr/min, supérieure à une vitesse de fonctionnement nominal. Ceci favorise une augmentation de pression et un écoulement du fluide réfrigérant dans la première boucle A entrainant l'évacuation des résidus à travers le premier détendeur 7.

Ladite première étape dure, par exemple, de 30 secondes à deux minutes, notamment environ 1 minute. Pendant cette étape, il peut y avoir un échange de chaleur avec un flux d'air. Suivant les portions de circuit dans lesquelles le fluide réfrigérant circule, l'échange de chaleur peut avoir lieu avec le flux d'air intérieur 100 au niveau du deuxième échangeur 9, ou peut avoir lieu avec le flux d'air extérieur 200 au niveau du troisième échangeur 13.

Le procédé de contrôle suivant l'invention comprend en outre, avantageusement, une deuxième étape dans laquelle ladite première boucle échange de la chaleur avec un flux d'air. Il s'agit en particulier du flux d'air intérieur 100 ou du flux d'air extérieur 200, ceci en fonction du trajet suivi par le fluide réfrigérant.

Lors de cette deuxième étape, le débit du fluide réfrigérant est inférieur audit débit augmenté de la première étape. Pour cela le compresseur 3 tourne à une vitesse réduite par rapport à la vitesse accélérée, par exemple réduite de moitié.

On obtient de la sorte une augmentation de pression et une évaporation de la phase liquide éventuellement présente dans le liquide réfrigérant, en particulier au niveau du compresseur 3.

Au cours de cette deuxième étape, le premier détendeur 7 est maintenu ouvert au-delà de la plage d'ouverture en fonctionnement nominal du circuit. Il est à noter que lors de la première et/ou de la deuxième étape, l'écoulement du flux d'air 100, 200 est favorisé par un groupe moto ventilateur positionné en face avant du véhicule pour le flux d'air extérieur 200 ou au niveau du système CVC 40 pour le flux d'air intérieur 100.

Ladite deuxième étape dure, par exemple, de 15 secondes à 1 minute, notamment environ 30 secondes.

Après évaporation de la phase liquide du fluide réfrigérant circulant dans le compresseur 3, celui-ci est arrêté de sorte que le fluide ne circule plus. Le premier détendeur 7 est alors ramené à une position située dans la plage d'ouverture en fonctionnement nominal du circuit.

Avantageusement, le groupe moto ventilateur reste activé pendant une durée prédéterminée, environ 10 secondes, au début de cette troisième étape.

A l'issue de cette troisième étape, le circuit est prêt à fonctionner de façon nominale.

Afin de ne pas complexifier le circuit, lors de la première étape, voire lors de la deuxième étape, ledit fluide suit un parcours de ladite première boucle également suivi par ledit fluide réfrigérant lors d'une mode de fonctionnement nominal dudit circuit. Ainsi, dans le cas du circuit de régulation thermique représenté, il suit, par exemple, ledit parcours principal. Dans un tel cas, le groupe moto-ventilateur forçant un flux d'air lors de la deuxième étape est celui correspondant au troisième échangeur 13.

Cela étant, afin de prévenir toute nouvelle obstruction qui pourrait survenir dans la première boucle A, le fluide réfrigérant peut être amené à contourner d'éventuels autres points susceptibles d'être obstrués par les résidus après leur évacuation du premier détendeur 7. Il s'agit notamment de tout autre détendeur situé en aval du premier détendeur 7.

Ainsi, dans le cas du circuit de régulation thermique représenté, le deuxième détendeur 11 situé sur le parcours principal peut être le siège d'une accumulation des résidus évacués du premier détendeur 7. Pour prévenir une telle obstruction, ledit fluide réfrigérant suit le parcours secondaire.

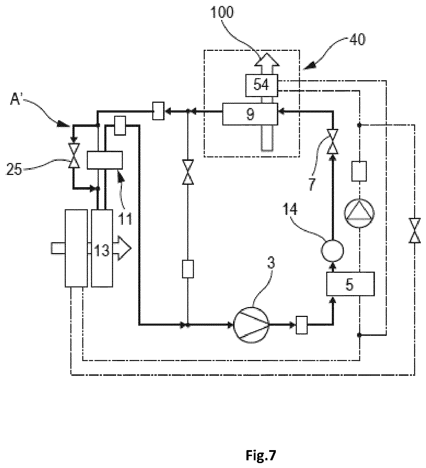

En variante, en se reportant de nouveau à la figure 1, la boucle A comprend une branche de dérivation A' disposée en parallèle du deuxième détendeur 11 et équipée d'une vanne 25. Ladite branche de dérivation A' permet de définir un parcours tertiaire qui comprend dans l'ordre le compresseur 3, le premier échangeur 5, le filtre 14, le premier détendeur 7, le deuxième échangeur 9 et le troisième échangeur 13 et ledit fluide réfrigérant suit ledit parcours tertiaire (voir figure 7) lors de la première, voire lors de la seconde étape. Dans un tel cas, le groupe moto-ventilateur forçant un flux d'air lors de la deuxième étape est celui correspondant au deuxième échangeur 9.

## Revendications

1. Procédé de contrôle d'un circuit (1) de régulation thermique, notamment pour un véhicule automobile, ledit circuit comprenant une première boucle (A) de circulation d'un fluide réfrigérant à travers un premier détendeur (7) à ouverture réglable, ledit procédé comprenant une première étape d'ouverture dudit premier détendeur (7) au-delà d'une plage d'ouverture en fonctionnement nominal du circuit de sorte à permettre une évacuation de résidus à travers ledit premier détendeur(7), lors de ladite première étape, on entraine ledit fluide réfrigérant est entrainé selon un débit, dit augmenté, supérieur à un débit en fonctionnement nominal du circuit, **caractérisé en ce que** le procédé comprend une deuxième étape, postérieure à la première étape, deuxième étape dans laquelle le débit du fluide réfrigérant est inférieur audit débit augmenté, ledit premier détendeur (7) étant maintenu en une position d'ouverture au-delà de ladite plage d'ouverture en fonctionnement nominal du circuit.

2. Procédé selon la revendication 1 dans lequel, lors de ladite première étape, on filtre lesdits résidus à l'aide d'un filtre situé sur ladite première boucle (A) en aval dudit premier détendeur (7) selon le sens de circulation dudit fluide réfrigérant.

3. Procédé selon l'une quelconques des revendications précédentes dans lequel ladite première boucle (A) échange des calories avec un flux d'air, notamment lors de la première et/ou de la deuxième étape.

4. Procédé selon la revendication précédente, dans lequel un groupe moto ventilateur est actionné pour accélérer ledit flux d'air.

5. Procédé selon la revendication 1, comprenant une troisième étape, postérieure à la deuxième étape, troisième étape dans laquelle le fluide réfrigérant ne circule plus et ledit premier détendeur (7) est ramené dans une position située dans la plage d'ouverture en fonctionnement nominal du circuit.

6. Procédé selon l'une quelconque des revendications 1 à 5 dans lequel, lors de la première étape, ledit fluide réfrigérant suit un parcours de ladite première boucle (A) également suivi par ledit fluide réfrigérant lors d'un mode de fonctionnement nominal dudit circuit.

7. Procédé selon l'une quelconque des revendications précédentes,
- ladite première boucle (A) comprenant en outre un compresseur (3), un premier échangeur (5), un deuxième échangeur (9) ainsi qu'un troisième échangeur (13), ledit premier détendeur (7) étant disposé en entrée dudit deuxième échangeur (9), ledit troisième échangeur (13) étant équipé en entrée d'un deuxième détendeur (11), et
- ledit circuit (1) comprenant une deuxième boucle (B) de circulation d'un fluide caloporteur, ladite deuxième boucle étant configurée pour échanger des calories avec ladite première boucle (A) à travers ledit premier échangeur (5),
chacune desdites boucles (A, B) étant en outre configurée pour échanger des calories avec un flux d'air extérieur (200) et/ou un flux d'air intérieur (100).

8. Procédé selon la revendication précédente, dans lequel ledit circuit (1) est configuré pour fonctionner en :
- un mode de pompe à chaleur dans lequel le flux d'air intérieur (100) est réchauffé au moyen d'une chaleur récupérée du flux d'air extérieur (200) par l'intermédiaire de ladite première boucle (A) et de ladite deuxième boucle (B), et/ou
- un mode de déshumidification totale dans lequel le flux d'air intérieur (100) est refroidi puis réchauffé au moyen d'un échange de chaleur avec le flux d'air extérieur (200) par l'intermédiaire de ladite première boucle (A) et de ladite deuxième boucle (B), ledit fluide réfrigérant empruntant un parcours principal fermé passant dans l'ordre par ledit compresseur (3), ledit premier échangeur (5), ledit filtre (14), ledit premier détendeur (7), ledit deuxième échangeur (9), ledit deuxième détendeur (11) et ledit troisième échangeur (13) pour revenir audit compresseur (3).

9. Procédé selon l'une des revendications 7 ou 8 dans lequel ledit circuit (1) est configuré pour fonctionner en:
- un mode de climatisation dans lequel le flux d'air intérieur (100) est refroidi en relâchant de la chaleur dans le flux d'air extérieur (200) par l'intermédiaire de ladite première boucle (A) et ladite deuxième boucle (B), et/ou
- un mode de déshumidification simple dans lequel ledit flux d'air intérieur (100) est refroidi puis réchauffé au moyen d'un échange de chaleur avec le flux d'air extérieur (200) par l'intermédiaire de ladite première boucle (A) et ladite deuxième boucle (B), ledit fluide réfrigérant étant configuré pour emprunter un parcours secondaire fermé passant dans l'ordre par ledit compresseur (3), ledit premier échangeur (5), ledit filtre (14), ledit premier détendeur (7) et ledit deuxième échangeur (9) pour revenir audit compresseur (3).

10. Procédé selon l'une quelconque des revendications 8 ou 9, dans lequel ledit fluide réfrigérant et/ou lesdits résidus s'écoulent, lors de ladite première étape, suivant ledit parcours secondaire fermé.

11. Procédé selon l'une quelconque des revendications 8 ou 9 dans lequel ledit fluide réfrigérant et/ou lesdits résidus s'écoulent, lors de ladite première étape, suivant ledit parcours principal fermé, ou un parcours tertiaire fermé passant dans l'ordre par ledit compresseur (3), ledit premier échangeur (5), ledit filtre (14), ledit premier détendeur (7), ledit deuxième échangeur (9) et ledit troisième échangeur (13), en contournant ledit deuxième détendeur (11), pour revenir audit compresseur (3).

## Patentansprüche

1. Verfahren zur Steuerung eines Temperaturregelkreises (1), insbesondere für ein Kraftfahrzeug, wobei der Regelkreis eine erste Zirkulationsschleife (A) eines Kältemittels durch einen ersten Druckminderer (7) mit regelbarer Öffnung umfasst, wobei das Verfahren einen ersten Schritt der Öffnung des ersten Druckminderers (7) über einen Öffnungsbereich im Nennbetrieb des Regelkreises hinaus umfasst, um ein Austragen von Rückständen durch den ersten Druckminderer (7) hindurch zu ermöglichen, wobei im ersten Schritt das Kältemittel mit einer Durchflussrate angetrieben wird, erhöhte Durchflussrate genannt, die größer als eine Durchflussrate im Nennbetrieb des Regelkreises ist, **dadurch gekennzeichnet, dass** das Verfahren einen zweiten Schritt umfasst, der auf den ersten Schritt folgt, wobei in diesem zweiten Schritt die Durchflussrate des Kältemittels niedriger als die erhöhte Durchflussrate ist, wobei der erste Druckminderer (7) in einer Position der Öffnung über den Öffnungsbereich im Nennbetrieb des Regelkreises hinaus gehalten wird.

2. Verfahren nach Anspruch 1, wobei im ersten Schritt die Rückstände mithilfe eines Filters gefiltert werden, das sich in der ersten Schleife (A) stromabwärts des ersten Druckminderers (7) in der Strömungsrichtung des Kältemittels befindet.

3. Verfahren nach einem der vorhergehenden Ansprüche, wobei die erste Schleife (A) mit einem Luftstrom Wärme austauscht, insbesondere im ersten und/oder im zweiten Schritt.

4. Verfahren nach dem vorhergehenden Anspruch, wobei eine Gebläseeinheit betätigt wird, um den Luftstrom zu beschleunigen.

5. Verfahren nach Anspruch 1, welches einen dritten Schritt umfasst, der auf den zweiten Schritt folgt, wobei in diesem dritten Schritt das Kältemittel nicht mehr zirkuliert und der erste Druckminderer (7) in eine Position zurückgestellt wird, die sich im Öffnungsbereich im Nennbetrieb des Regelkreises befindet.

6. Verfahren nach einem der Ansprüche 1 bis 5, wobei im ersten Schritt das Kältemittel einem Weg der ersten Schleife (A) folgt, dem auch das Kältemittel in einer Nennbetriebsart des Regelkreises folgt.

7. Verfahren nach einem der vorhergehenden Ansprüche,
- wobei die erste Schleife (A) außerdem einen Kompressor (3), einen ersten Wärmetauscher (5), einen zweiten Wärmetauscher (9) sowie einen dritten Wärmetauscher (13) umfasst, wobei der erste Druckminderer (7) am Eingang des zweiten Wärmetauschers (9) angeordnet ist, wobei der dritte Wärmetauscher (13) am Eingang mit einem zweiten Druckminderer (11) ausgestattet ist, und
- wobei der Regelkreis (1) eine zweite Zirkulationsschleife (B) eines Wärmeträgerfluids umfasst, wobei die zweite Schleife dafür ausgelegt ist, mit der ersten Schleife (A) über den ersten Wärmetauscher (5) Wärme auszutauschen,
wobei jede der Schleifen (A, B) außerdem dafür ausgelegt ist, mit einem äußeren Luftstrom (200) und/oder einem inneren Luftstrom (100) Wärme auszutauschen.

8. Verfahren nach dem vorhergehenden Anspruch, wobei der Regelkreis (1) dafür ausgelegt ist, zu arbeiten in:
- einem Wärmepumpenmodus, in dem der innere Luftstrom (100) mittels Wärme erwärmt wird, die aus dem äußeren Luftstrom (200) über die erste Schleife (A) und die zweite Schleife (B) gewonnen wird, und/oder
- einem Modus der vollständigen Entfeuchtung, in dem der innere Luftstrom (100) gekühlt und danach mittels eines Wärmeaustauschs mit dem äußeren Luftstrom (200) über die erste Schleife (A) und die zweite Schleife (B) wieder erwärmt wird, wobei das Kältemittel einem geschlossenen Hauptweg folgt, welcher der Reihe nach durch den Kompressor (3), den ersten Wärmetauscher (5), das Filter (14), den ersten Druckminderer (7), den zweiten Wärmetauscher (9), den zweiten Druckminderer (11) und den dritten Wärmetauscher (13) verläuft, um zum Kompressor (3) zurückzuführen.

9. Verfahren nach einem der Ansprüche 7 oder 8, wobei der Regelkreis (1) dafür ausgelegt ist, zu arbeiten in:
- einem Klimatisierungsmodus, in dem der innere Luftstrom (100) gekühlt wird, indem Wärme über die erste Schleife (A) und die zweite Schleife (B) in den äußeren Luftstrom (200) abgegeben wird, und/oder
- einem Modus der einfachen Entfeuchtung, in dem der innere Luftstrom (100) gekühlt und danach mittels eines Wärmeaustauschs mit dem äußeren Luftstrom (200) über die erste Schleife (A) und die zweite Schleife (B) wieder erwärmt wird, wobei das Kältemittel dafür ausgelegt ist, einem geschlossenen sekundären Weg zu folgen, welcher der Reihe nach durch den Kompressor (3), den ersten Wärmetauscher (5), das Filter (14), den ersten Druckminderer (7) und den zweiten Wärmetauscher (9) verläuft, um zum Kompressor (3) zurückzuführen.

10. Verfahren nach einem der Ansprüche 8 oder 9, wobei das Kältemittel und/oder die Rückstände im ersten Schritt entlang des geschlossenen sekundären Weges strömen.

11. Verfahren nach einem der Ansprüche 8 oder 9, wobei das Kältemittel und/oder die Rückstände im ersten Schritt entlang des geschlossenen Hauptweges strömen, oder entlang eines geschlossenen tertiären Weges, welcher der Reihe nach durch den Kompressor (3), den ersten Wärmetauscher (5), das Filter (14), den ersten Druckminderer (7), den zweiten Wärmetauscher (9) und den dritten Wärmetauscher (13) verläuft, unter Umgehung des zweiten Druckminderers (11), um zum Kompressor (3) zurückzuführen.

## Claims

1. Method for controlling a thermal regulation circuit (1), in particular for a motor vehicle, said circuit comprising a first loop (A) for circulating a refrigerant fluid through a first adjustable-opening expansion valve (7), said method comprising a first step of opening said first expansion valve (7) beyond an opening range during nominal operation of the circuit so as to allow residues to be discharged through said first expansion valve (7), and during said first step, said refrigerant fluid is induced to flow at a flow rate referred to as increased flow rate, which is greater than a flow rate during nominal operation of the circuit, **characterized in that** the method comprises a second step, performed after the first step, in which second step the flow rate of the refrigerant fluid is lower than said increased flow rate, said first expansion valve (7) being kept in an open position beyond said opening range during nominal operation of the circuit.

2. Method according to Claim 1, wherein, during said first step, said residues are filtered using a filter located in said first loop (A) downstream of said first expansion valve (7) in the direction of circulation of said refrigerant fluid.

3. Method according to either one of the preceding claims, wherein said first loop (A) exchanges heat with a stream of air, in particular during the first and/or the second step.

4. Method according to the preceding claim, wherein engine fans are actuated to accelerate said stream of air.

5. Method according to Claim 1, comprising a third step, performed after the second step, in which third step the refrigerant fluid no longer circulates and said first expansion valve (7) is brought into a position located within the opening range during nominal operation of the circuit.

6. Method according to any one of Claims 1 to 5, wherein, during the first step, said refrigerant fluid follows a path through said first loop (A) that is also followed by said refrigerant fluid during a nominal operating mode of said circuit.

7. Method according to any one of the preceding claims,
- said first loop (A) moreover comprising a compressor (3), a first exchanger (5), a second exchanger (9), and a third exchanger (13), said first expansion valve (7) being disposed at the inlet of said second exchanger (9), said third exchanger (13) being equipped at the inlet with a second expansion valve (11), and
- said circuit (1) comprising a second loop (B) for circulating a heat transfer fluid, said second loop being configured to exchange heat with said first loop (A) through said first exchanger (5),
each of said loops (A, B) being moreover configured to exchange heat with a stream of outside air (200) and/or a stream of inside air (100).

8. Method according to the preceding claim, wherein said circuit (1) is configured to operate in:
- a heat pump mode, in which the stream of inside air (100) is heated by means of heat collected from the stream of outside air (200) via said first loop (A) and said second loop (B), and/or
- a full-dehumidification mode, in which the stream of inside air (100) is cooled and then heated by means of heat exchange with the stream of outside air (200) via said first loop (A) and said second loop (B), said refrigerant fluid taking a closed main path passing, in order, through said compressor (3), said first exchanger (5), said filter (14), said first expansion valve (7), said second exchanger (9), said second expansion valve (11), and said third exchanger (13) so as to return to said compressor (3).

9. Method according to one of Claims 7 and 8, wherein said circuit (1) is configured to operate in:
- an air conditioning mode, in which the stream of inside air (100) is cooled by releasing heat into the stream of outside air (200) via said first loop (A) and said second loop (B), and/or
- a simple dehumidification mode, in which said stream of inside air (100) is cooled and then heated by means of heat exchange with the stream of outside air (200) via said first loop (A) and said second loop (B), said refrigerant fluid being configured to take a closed secondary path passing, in order, through said compressor (3), said first exchanger (5), said filter (14), said first expansion valve (7), and said second exchanger (9) so as to return to said compressor (3).

10. Method according to either one of Claims 8 and 9, wherein, during said first step, said refrigerant fluid and/or said residues flow along said closed secondary path.

11. Method according to either one of Claims 8 and 9, wherein, during said first step, said refrigerant fluid and/or said residues flow along said closed main path, or a closed tertiary path passing, in order, through said compressor (3), said first exchanger (5), said filter (14), said first expansion valve (7), said second exchanger (9), and said third exchanger (13), bypassing said second expansion valve (11), so as to return to said compressor (3).
